Europäisches Patentamt

European Patent Office

Office européen des brevets

(11) Publication number: **0 224 544**
**B1**

# EUROPEAN PATENT SPECIFICATION

(45) Date of publication of patent specification: **28.11.90**

(21) Application number: **86903491.8**

(22) Date of filing: **30.05.86**

(86) International application number:
**PCT/GB86/00303**

(87) International publication number:
**WO 86/07177 04.12.86 Gazette 86/26**

(51) Int. Cl.$^5$: **G 09 F 9/30, G 02 B 6/00**

(54) **FIBRE OPTICS LIGHTING SYSTEM.**

(30) Priority: **30.05.85 GB 8513600**

(43) Date of publication of application:
**10.06.87 Bulletin 87/24**

(45) Publication of the grant of the patent:
**28.11.90 Bulletin 90/48**

(84) Designated Contracting States:
**BE DE FR GB IT NL SE**

(56) References cited:
**DE-A-1 812 677**
**DE-A-2 001 090**
**US-A-3 829 857**
**US-A-4 124 882**
**US-A-4 296 562**

(73) Proprietor: **BUTTS, Peter Ralph**
**36 Hollingsworth Road**
**Croydon CRO 5RP (GB)**

(72) Inventor: **BUTTS, Peter Ralph**
**36 Hollingsworth Road**
**Croydon CRO 5RP (GB)**

(74) Representative: **Gordon, Richard John Albert**
**R.J. Gordon & Company 17 Richmond Hill**
**GB-Richmond-upon-Thames, Surrey TW10 6RE**
**(GB)**

## Description

This invention relates to a fibre optics lighting system.

It is known from DE—A—2 001 090 and US—A—4 296 562 to use optical fibres for providing illuminated displays. Generally, a frame is constructed for supporting tail end portions of the optical fibres in a predetermined configuration and a bush containing receptor end portions of the fibres is located on the frame adjacent a light source so that, when receptor ends of the fibres are exposed to the light source, light is transmitted through the fibres to tail ends thereof whereby the configuration is indicated by the illuminated tail ends of the fibres.

While such an arrangement may be satisfactory for special displays, the construction of a frame and assembly of the optical fibres on the frame is time consuming and is not suited to large scale production.

According to the present invention, there is provided a fibre optics lighting system which is characterized in that there is provided a plurality of lenses each associated with a corresponding one of the tail end portions of the fibres and a plurality of lens supports each for supporting a corresponding one of the lenses.

Following is a description, by way of example only and reference to the accompanying drawings, of one method of carrying the invention into effect.

In the drawings:—

Figure 1 is an elevation of one embodiment of a fibre optics lighting system in accordance with the present invention,

Figure 2 is a diagrammatic cross section on the line A—A of Figure 1 shown of enlarged depth from front to rear for illustrative purposes,

Figure 3 is a diagrammatic representation of a stage during manufacture of a support of a fibre optics lighting system in accordance with the present invention,

Figure 4 is a diagrammatic representation showing assembly of the support,

Figure 5 is a diagrammatic cross section of another embodiment of a fibre optics lighting system in accordance with the present invention,

Figure 6 is an underneath plan view of an array of complementary panels for use in the embodiment shown in Figure 5, each panel having a configuration of apertures containing lenses,

Figure 7 is a diagrammatic plan view of an array of prisms and associated optical fibres of the embodiment shown in Figure 5,

Figure 8 is a diagrammatic cross section showing an alternative reflector for use in the embodiment shown in Figure 5 in substitution for the prisms,

Figure 9 is an underneath plan view of an array of complementary panels for use in the embodiment shown in Figure 5, each panel having a configuration of apertures containing lenses which configuration is different from the configuration of the apertures shown in Figure 5,

Figure 10 is an underneath plan view of an array of complementary panels for use in the embodiment shown in Figure 5, each panel having a configuration of apertures containing lenses which configuration is different from the configuration of apertures shown in Figures 5 and 9, and

Figure 11 is an underneath plan view of an array of complementary panels for use in the embodiment shown in Figure 5, each panel having a configuration of apertures containing lenses which configuration is different from the configuration of apertures shown in Figures 5, 9 and 10.

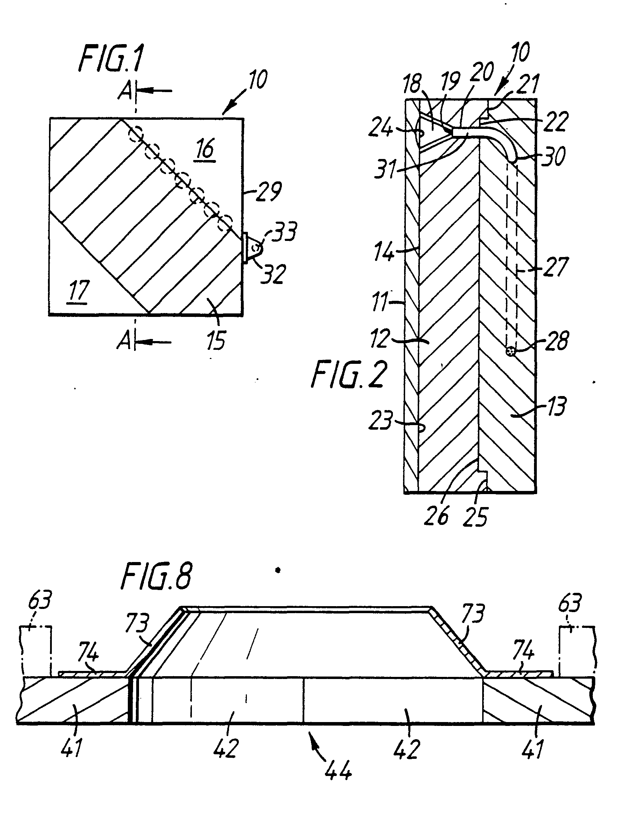

Referring now to Figures 1 and 2 of the drawings, there is shown a rectangular sign 10 for installation at the rear of a commercial vehicle. The sign comprises a laminate of three panels 11, 12 and 13 of rectangular plastics material of equal area, the panel 11 comprising a front panel of the sign, the panel 13 comprising a rear panel of the sign and the panel 12 being an intermediate panel sandwiched between the front panel 11 and the rear panel 13.

A front surface 14 of the intermediate panel 12 is coloured red in a transversely extending band 15 defined by a plurality of spaced rectangles and the remaining diagonally opposed triangular areas 16, 17 of the surface 14 are coloured yellow, the yellow pigment being spaced from the adjacent margins of the red band 15. The surface 14 is provided with a lacquer so as to reflect light incident thereon and the lacquer and/or the red and yellow pigments have characteristics such that they are luminous. The intermediate panel 12 is provided with a plurality of recesses 18 extending in a series longitudinally of a margin of the red band 15 and an adjacent the yellow triangular area 16, each recess 18 diverging outwardly from a base 19 towards the surface 14. The intermediate panel 12 is provided with a plurality of bores 20 each being in communication with a corresponding one of the recesses 18 through the base 19 thereof. A rear surface 21 of the intermediate panel 12 is recessed, as shown at 22.

The front panel 11 is of substantially less thickness than the intermediate panel 12 and is transparent to light. A rear surface 23 of the front panel 11 is provided with a series of concave dimples forming lenses 24, each being located adjacent a corresponding one of the recesses 18.

The rear panel 13 also is of less thickness than the intermediate panel 12 but is of greater thickness than the front panel 11. The rear panel 13 is provided with a front surface 25 which is stepped as shown at 26 and is of such dimension as to complement the recess 22 of the rear surface 21 of the intermediate panel 12. The rear panel 13 is provided with a plurality of channels 27 arranged such that, when the rear panel 13 is united with the intermediate panel 12, the channels 27 extend from corresponding recesses 18 to a common aperture 28 located in a side wall 29 of the rear panel 13.

Prior to assembly with the intermediate panel 12, the channels 27 have threaded therethrough optical fibres 30 arranged such that tail end portions 31 thereof extend outwardly from the front surface 25 of the rear panel 13. Receptor end portions (not shown) of the fibres 30 are contained in a bush (not shown) which is located adjacent the aperture 28 of the side wall 29 of the rear panel 13.

The rear panel 13 then is located adjacent the intermediate panel 12 so that the tail end portions 31 of the optical fibres 30 are received in corresponding bores 20 of the intermediate panel 12. The rear panel 13 then is moved into abutment with the intermediate panel 12 so that the stepped portion 26 of the rear panel 13 is received in the recess 22 of the intermediate panel 12 and the rear panel 13 and intermediate panel 12 thereby are located with respect one to another.

The front panel 11 then is united with the front surface 14 of the intermediate panel 12 by suitable means, such as a bonding solution.

Final assembly of the sign 10 is completed when a housing 32 containing a light source 33, such as a halogen bulb, is secured to the side wall 29 of the rear panel 13 such that the light source 33 is adjacent the receptor end portions of the fibres 30.

The sign 10 is secured to a rear of the vehicle and the lamp 33 is connected in circuit with an ignition system of the vehicle. In this manner, the lamp 33 will be illuminated while an engine of the vehicle is operating and, in consequence, each of the lenses 24 will be illuminated by corresponding optical fibres 30 thereby providing an illuminated array on the sign 10 extending longitudinally of a margin between the red band and an adjacent yellow triangular area 16.

It will be appreciated that further lenses 24 and corresponding optical fibres 30 may be provided adjacent the margin between the red band 15 and the other yellow triangular area 17 or, indeed, in any other configuration, the receptor end portions of the fibres 30 being located adjacent the light source 30.

It will also be appreciated that the rear panel 13 may be moulded to the intermediate panel 12. Prior to moulding, however, the tail end portions 31 of the optical fibres 30 will be inserted in corresponding bores 20 of the intermediate panel 12 and the intermediate panel 12 then would be placed in a mould. A thermo-setting plastics material then would be poured into the mould and would subsequently be cured to form a rigid rear panel 13 containing the optical fibres 30. The fibres 30 would thus be encapsulated in the panel 13.

It will be appreciated that the optical fibres 30 may be encapsulated in the rear panel 13 as a separate unit. Such encapsulation would be achieved by arranging the optical fibres 30 in a predetermined configuration in a mould and pouring a thermo-setting plastics material into the mould and subsequently curing the material to form a rigid rear panel 13 containing the optical fibres 30, the tail end portions 31 extending from the front surface 25 of the rear panel 13 and the receptor end portions of the optical fibres 30 extending from the side wall 29 of the rear panel 13.

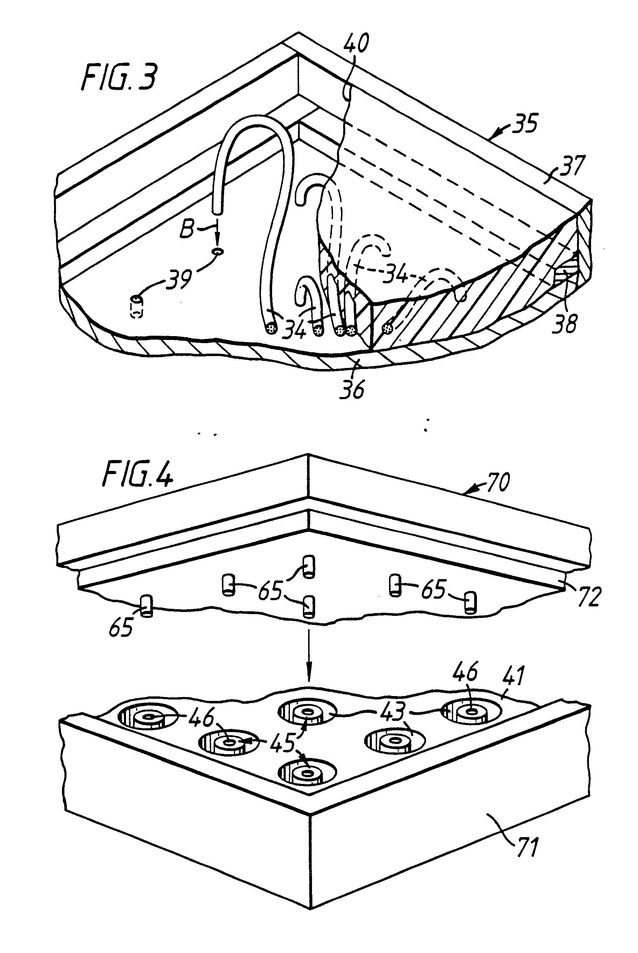

In Figure 3 of the drawings, there is shown, in diagrammatic form, a process for encapsulating optical fibres 34. Encapsulation is carried out by means of a mould 35 comprising a base 36 and a peripheral wall 37 upstanding from the base 36. Extending throughout the length of the wall 37 adjacent the base 36 is a bead 38. The base 36 is provided with apertures 39 arranged in a predetermined configuration. The optical fibres 34 are located in the mould 35 and tail end portions of the fibres 34 are inserted through corresponding apertures 39, as indicated by the arrow B in Figure 3. Receptor end portions of the optical fibres 34 extend through an aperture (not shown) in the peripheral wall 37. A thermo-setting plastics material, such as polyurethane or other plastics foam material, is poured into the mould 35 and subsequently is cured to form a rigid panel 40 containing the optical fibres 34 encapsulated therein.

Referring now to Figures 4 to 7, there is shown a plurality of ceiling panels 41 for co-operating one with another to form a suspended ceiling of a building. Each of the panels 41 is rectangular and has an arcuate cut-out portion 42 at one corner thereof. Each panel 41 also is provided with plurality of apertures 43 each being equi-distant from an adjacent aperture 43 so as to comprise rows and columns of apertures 43 extending parallel to side edges of the panels 41.

The arcuate cut-outs 42 are arranged such that, when four panels 41 are located adjacent one another edge to edge such that surfaces thereof extending transverse to longitudinal bores of the apertures 43 are contained in common planes, the cut-out portions 42 combine to form an aperture 44.

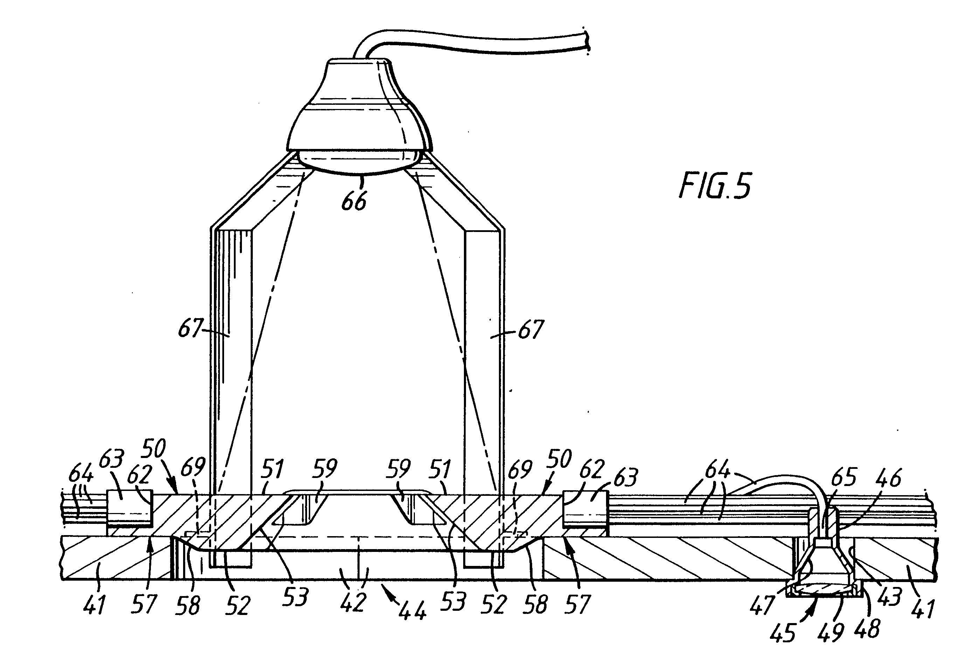

Each of the apertures 43 has received therein a corresponding one of a plurality of lens holders 45 each having a cylindrical portion 46, a conical portion 47 extending axially and diverging outwardly from the cylindrical portion 46 and a circumferential flange 48 remote from the cylindrical portion 46. Each lens holder 45 has retained therein by means of the flange 48 a lens 49. The dimensions of the lens holders 45 are such that each lens holder 45 may be inserted, with the cylindrical portion 46 leading, into a corresponding aperture 43 of a panel 41 and will be retained therein by interference fit, the flange 48 thereof engaging an outer surface of the panel 41, as shown in Figure 5.

Associated with each of the panels 41 is a corresponding one of a plurality of prisms 50. Each prism 50 comprises an upper surface 51, a lower surface 52 extending substantially parallel to the surface 51, an inner downwardly sloping surface 53, sidewalls 54, 55, a curved outer surface 56 and a protuberance 57 extending radially outwardly of the outer surface 56. The side walls 54, 55 are contained in planes which converge radially inwardly of the outer surface 53. The protuberance 57 has a lower arcuate surface 58 which extends downwardly and inwardly towards the lower surface 52. Each prism 50 is provided with a substantially right-angled indentation 59 rearwardly of each corresponding side wall 54, 55. Also, each prism 50 is provided with apertures 60 in each protuberance 57 whereby each prism 50 may be secured to a corresponding ceiling panel 41 by means of pins 61 inserted in corresponding apertures 60.

Each of the protuberances 57 is provided with a recess 62 for receiving a corresponding one of a plurality of bushes 63 of harnesses of optical fibres 64, receptor end portions of the optical fibres 64 being received in the corresponding bushes 63. Tail end portions 65 of the fibres 64 are inserted in cylindrical portions 46 of corresponding lens holders 45, as shown in Figure 5.

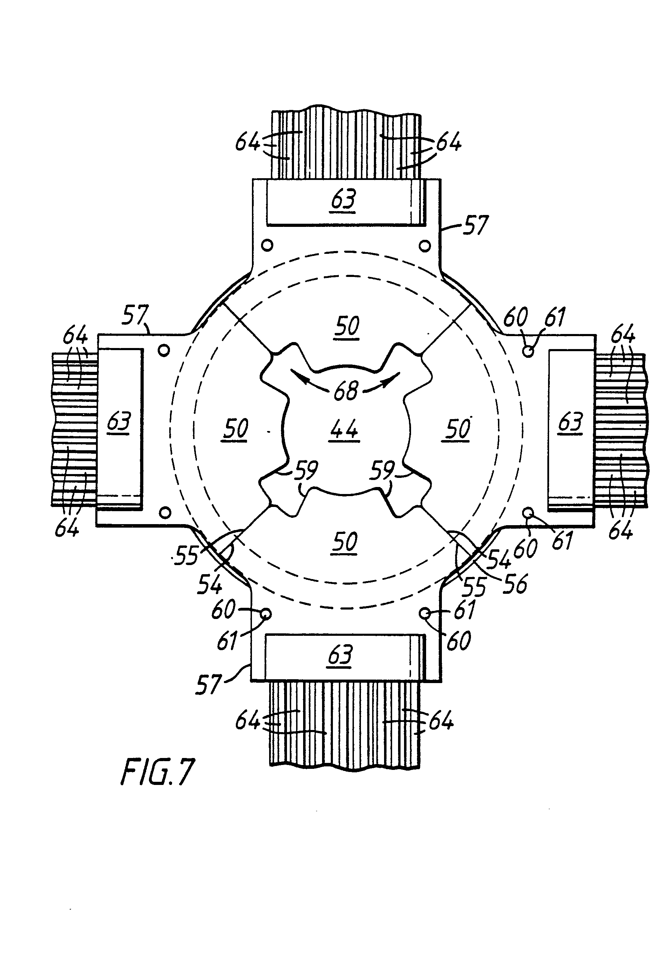

The arrangement is such that a light source 66 having four depending legs 67 can be mounted on the prisms 50 of an array of four ceiling panels 41 by inserting lower end portions of the legs 67 into recesses 68 formed by pairs of adjacent indentations 59 of the prisms 50, as shown in Figure 7, downward movement of the legs 67 being restricted by outwardly extending flanges 69 of the legs 67.

The arrangement is such that light directed from a central portion of the light source 66 passes downwardly through an aperture 44 formed by the inner surfaces 53 of the prisms 50 but light directed downwardly from the light source 66 on to the upper surfaces 51 of the prisms 50 will be reflected by the inner surfaces 53 to the receptor ends of the optical fibres 64. Light received by the receptor ends of the fibres 64 will be transmitted therealong to the tail ends thereof and will be emitted through the lenses 49.

In this manner, light directed downwardly from the light source 66 through an aperture 44 formed by the inner surfaces 53 of the prisms 50 will be augmented by light emitted from the optical fibres 64 through the lenses 49 provided at a plurality of locations on the panels 41.

It will be appreciated that the optical fibres 64 may be encapsulated in a panel 70 (see Figure 4) which may also incorporate the protuberances 57 of the prisms 50. The tail end portions 65 of the optical fibres 64 would project downwardly from the panel 70 and, during manufacture, would be inserted in the cylindrical portions 46 of corresponding lens holders 45, as shown in Figure 4. Each ceiling panel 41 would be provided with a stepped peripheral wall 71 which would be complementary to a stepped wall 72 of the panel 70.

It will be appreciated that reflection of light from the light source 66 may be achieved by means other than the prisms 50. For example, four panels 41 may be united at adjacent cut-out portions 42 thereof by means of a conical reflecting surface 73 having a radially outwardly extending circumferential flange 74 for attachment to upper surface of the ceiling panels 41.

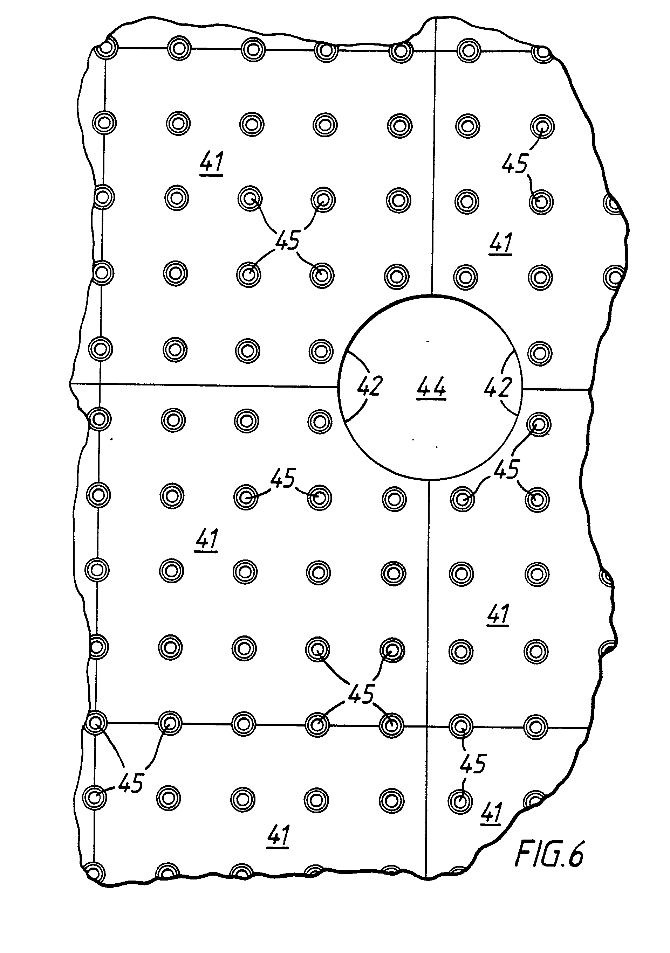

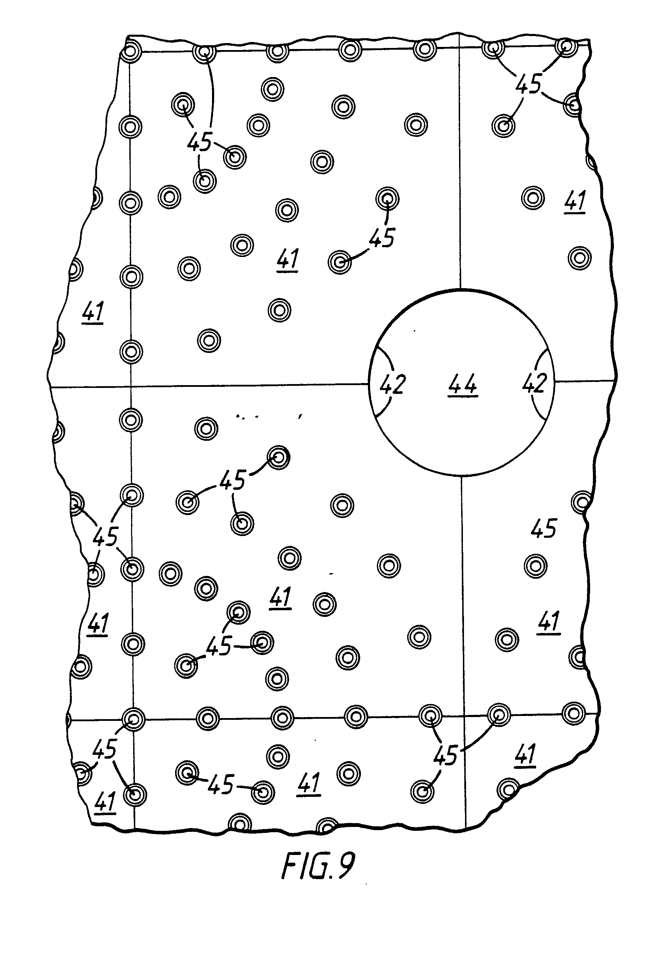

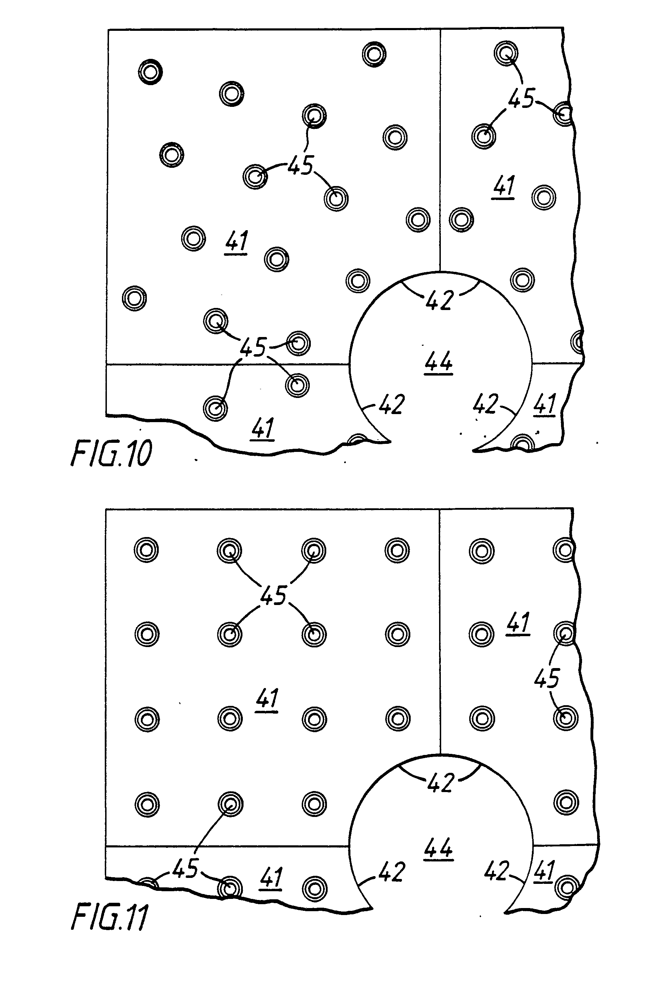

It will also be appreciated that the ceiling panels 41 may be provided with the apertures 43 in a configuration different from that shown in Figure 6. Examples of alternative configurations are shown in Figures 9, 10 and 11.

Furthermore, it will be appreciated that the ceiling panels 41 need not necessarily be provided with corner cut-out portions 42. Instead, a configuration may be provided whereby receptor end portions of the optical fibres 64 are located below a light source at any location above the or each panel 41.

## Claims

1. A fibre optics lighting system comprising a plurality of optical fibres (64) each having a tail end portion and a receptor end portion, means (70) for supporting the fibres (64) so that when the receptor ends of the fibres (64) are exposed to a light source (66) light is transmitted through the fibres (64) to tail ends thereof and a panel (41) adapted to receive tail end portions of the fibres (64) in a predetermined configuration characterized in that there is provided a plurality of lenses (49) each associated with a corresponding one of the tail end portions of the fibres (64) and a plurality of lens supports (45) each for supporting a corresponding one of the lenses (49).

2. A system as claimed in Claim 1 characterized in that the receptor end portions of the fibres (64) are arranged in an annular configuration.

3. A system as claimed in Claim 1 or Claim 2 characterized in that the panel (41) comprises a plurality of apertures (43) at least some of which receive corresponding lens supports (45).

4. A system as claimed in any one of the preceding claims characterized in that the panel (41) is provided with an opening (44) whereby the light source (66) is exposed and provides a source of illumination in addition to illuminating the receptor ends of the fibres (64).

## Patentansprüche

1. Faseroptisches Beleuchtungssystem mit einer Vielzahl von optischen Fasern (64), von der jede einen schweifförmigen Endabschnitt und einen Empfangsendabschnitt aufweist, eine Einrichtung (70) zum Halten der Fasern (64), so daß wenn die Empfangsenden der Fasern (64) einer Lichtquelle (66) ausgesetzt sind, Licht durch die Fasern (64) zu deren schweifförmigen Enden übermittelt werden und einer Tafel (41), die dazu vorgesehen ist, die schweifförmigen Endabschnitte der Fasern (64) in einer vorbestimmten Konfiguration aufzunehmen, dadurch gekennzeichnet, daß eine Vielzahl von Linsen (49) vorgesehen ist, von denen jede einem entsprechenden schweifförmigen Endabschnitt der Fasern (64) zugeordnet ist, und eine Vielzahl von Linsenhalterungen (45), von denen jede eine entsprechende Linse (49) trägt.

2. System nach Anspruch 1, dadurch gekennzeichnet, daß die Empfangsendabschnitte der Fasern (64) in einer ringförmigen Konfiguration angeordnet sind.

3. System nach Anspruch 1 oder 2, dadurch gekennzeichnet, daß die Tafel (41) eine Vielzahl von Öffnungen (43) aufweist, wovon mindestens einige davon entsprechende Linsenhalterungen (45) aufnehmen.

4. System nach einem der vorangehenden Ansprüche, dadurch gekennzeichnet, daß die Tafel (41) mit einer Öffnung (44) versehen ist, wodurch die Lichtquelle (66) frei ist und zusätzlich zu der Beleuchung der Empfangsenden der Fasern (64) eine Beleuchtungsquelle darstellt.

**Revendications**

1. Système d'éclairage à fibres optiques, comportant une série de fibres optiques (64) ayant chacune une extrémité arrière et une extrémité réceptrice, des moyens (70) pour supporter les fibres (64) de manière que, lorsque les extrémités réceptrices des fibres (64) sont exposées à une source de lumière (66), de la lumière soit transmise dans les fibres (64) jusqu'à leur extrémité arrière, et un panneau (41) agencé pour recevoir les extrémités arrière des fibres (64) suivant une configuration prédéterminée, caractérisé en ce qu'il comporte une série de lentilles (49), dont chacune est associé à l'extrémité arrière d'une fibre correspondante (64), et une série de supports de lentilles (45) dont chacun est agencé pour supporter l'une desdites lentilles (49).

2. Système selon la revendication 1, caractérisé en ce que les extrémités réceptrices des fiches (64) sont rangées suivant une configuration annulaire.

3. Système selon la revendication 1 ou 2, caractérisé en ce que le panneau (41) comporte une série d'orifices (43) dont au moins quelques-uns reçoivent des supports de lentilles correspondants (45).

4. Système selon l'une des revendications précédentes, caractérisé en ce que le panneau (41) est pourvu d'une ouverture (44) par laquelle la source de lumière (66) est apparente et constitue une source d'éclairage en plus de l'éclairage qu'elle assure sur les extrémités réceptrices des fibres (64).

**FIG.1**

A

10

16

29

33

32

17

A

15

**FIG.2**

18 19 20 10 21

24 22

31 30

14

11 27

12 28

23 13

26 25

**FIG.8**

63 73 73 63

74 74

41 42 42 41

44

*FIG. 3*

40

35

37

B

39

34

34

38

36

*FIG. 4*

70

65

65

65

65

72

46    41

46

43

45

71

FIG.5

FIG.6

FIG.7

FIG.9

FIG.10

FIG.11